# EUROPEAN PATENT APPLICATION

(11) **EP 4 763 952 A1**
(43) Date of publication of application: **24.06.2026**
(21) Application number: 24221561.4
(22) Date of filing: 19.12.2024
(51) Int. Cl.: C10L 5/36, C10L 5/44, C10L 9/08, B01J 6/00, B01J 19/20

(54) **SYSTEM AND METHOD FOR REFINING COMBUSTIBLE PELLETS OR WOOD CHIPS**

(71) Applicant: E3 Carbon GmbH, 22559 Hamburg (DE)
(72) Inventor: Sieverts, Tom, 22559 Hamburg (DE)
(74) Representative: Uexküll & Stolberg

(57) **Abstract**

A system (1) for refining pellets or wood chips (2) by heat comprises a driven rotatable drum (3) which extends along and is rotatable around a longitudinal axis (4). The drum (3) has a product inlet (6) for receiving the pellets (2) or wood chips at a first end (7) of the drum (3) and a product outlet (8) for dispensing the pellets (2) at a second end (9) of the drum (3). The drum (3) comprises multiple baffles which, upon rotation of the drum (3), are adapted to circulate the pellets or wood chips (2) in the drum (3) and to convey the pellets or wood chips (2) from the product inlet (6) to the product outlet (8) along a conveying direction (12). The baffles extend parallel to the longitudinal axis (4) from the first end (7) towards the second end (9) of the drum (3). The baffles are mounted at equal angular distances from one another in a circumferential direction of the drum (3), thereby forming multiple openings through which a heating medium streams into and out of the drum (3). The system (1) further comprises a housing (110) surrounding the drum (3). The housing (110) comprises an inlet port (13) for introducing the heating medium into the housing (110) and towards the drum (3) and an outlet port (14) for dispensing the heating medium from the housing (110) and away from the rotatable drum (3). The system (1) further comprises a heating system (15) for heating the pellets or wood chips (2) in the drum (3) comprising at least one heating circuit (16) with the heating medium and with a heat source (17). The heating circuit (16) has a supply line (19) connecting the heat source (17) and the inlet port (13) of the housing and a return line (20) connecting the outlet port (14) of the housing (110) and the heat source (17). The heating medium is superheated steam, which is supplied through the supply line (19) from the heat source (17) to the inlet port (13) of the housing (110), streams through the housing (110) and through the rotatable drum (3) and returns through the return line (20) from the outlet port (14) to the heat source (17). The heat source (17) is adapted to deliver heat to the heating medium to produce superheated steam.

## Description

### FILED OF THE INVENTION

The present invention relates to a system for refining combustible pellets or wood chips by heat, a cooling system for cooling refined pellets or wood chips and to a method for refining combustible pellets or wood chips by heat.

### BACKGROUND OF THE INVENTION

Combustible pellets are often used as solid fuel, in particular in the form of co-firing in power stations for generating heat or electrical energy. Combustible pellets are commonly produced from biomass, for example from wood or straw. The biomass is shredded and pressed thereafter in the desired shape. When being used for co-firing in power stations, the pellets are normally stored outdoors before being used, and are thus exposed to environmental impacts such as moisture and rain. Combustible pellets produced from biomass could therefore lose their shape under the influence of moisture and quickly rot.

Document EP 2 794 822 A1, which is incorporated herein for reference in its entirety, discloses a method and a device for refining combustible pellets by heat that overcomes the above disadvantages. The pellets are heated to a temperature between 210°C and 390°C for a period of 1 minute to 30 minutes. The heating of the pellets is accomplished by a temperature-controlled air stream, which, due to its high streaming speed, is adapted to move the pellets, e.g. carry the pellets upward and swirl the pellets. The heat treatment of the pellets can be accomplished batch-wise in a treatment chamber or continuously in a drum. When a drum is used the pellets are introduced into the drum at one end side and moved through the drum to the opposite end side where they emerge again from the drum. The air stream is conducted through the drum moving from the one end surface to the opposite end surface in the same or the opposite direction to the pellets. The pellets treated in this way are watered-repellent and can be stored outdoors.

The method described above has to be carried out with care, as combustible pellets incorporate a relatively high content of dust which might lead to a dust explosion during the heat treatment and to pollution of the used apparatuses. Moreover, pellets tend to react with oxygen during the heat treatment which might lead to a breakdown or combustion of the pellets. Thus, very high air stream speeds and the swirling of the pellets during the heat treatment have to be avoided. It is also desirable that the heating of the pellets takes place in an atmosphere containing a reduced content of oxygen.

It is an object of the present invention to provide a system and a corresponding method for refining combustible pellets or wood chips by heat which allow the refining of pellets or wood chips in an environment which is substantially free or free of oxygen and which avoids high streaming speeds such that a reaction between the pellets or woof chips and oxygen is omitted.

### SUMMARY OF THE INVENTION

This object is achieved by a system for refining pellets or wood chips comprising the features of claim 1. Preferred embodiments are set out in the dependent claims.

According to the present invention the system comprises a driven rotatable drum which extends along and is rotatable around a longitudinal axis. The drum has a product inlet for receiving the pellets or wood chips at a first end of the drum and a product outlet for dispensing the pellets at a second end of the drum. The drum comprises multiple baffles which, upon rotation of the drum, are adapted to circulate the pellets or wood chips in the drum and to convey the pellets or wood chips from the product inlet to the product outlet along a conveying direction. The baffles extend parallel to the longitudinal axis from the first end towards the second end of the drum. The baffles are mounted at equal angular distances from one another in a circumferential direction of the drum, thereby forming multiple openings through which a heating medium streams into and out of the drum.

The system further comprises a housing surrounding the drum. The housing comprises an inlet port for introducing the heating medium into the housing and towards the drum and an outlet port for dispensing the heating medium from the housing and away from the rotatable drum.

The system further comprises a heating system for heating the pellets or wood chips in the drum comprising at least one heating circuit with the heating medium and with a heat source.

The heating circuit has a supply line connecting the heat source and the inlet port of the housing and a return line connecting the outlet port of the housing and the heat source. The heating medium is superheated steam, which is supplied through the supply line from the heat source to the inlet port of the housing, streams through the housing and through the rotatable drum and returns through the return line from the outlet port to the heat source. The heat source is adapted to deliver heat to the heating medium to produce superheated steam.

The expression "superheated steam", as used herein, and as known describes steam at a temperature higher than its vaporization point at the absolute pressure where the temperature is measured. Superheated steam and liquid water cannot coexist under thermodynamic equilibrium, as any additional heat simply evaporates more water and the steam will become saturated steam. However, this restriction may be violated temporarily in dynamic (non-equilibrium) situations. To produce superheated steam, for example, in a power plant or for processes the saturated steam drawn from a boiler is passed through a separate heating device which transfers additional heat to the steam by contact or by radiation. As used herein, the expression "to produce the superheated steam" is to be understood in such a way that the heat source is configured to heat up the heating medium again to produce superheated steam. Heating up the heating medium is necessary as the heating medium emerging from the rotatable drum has transferred some of its heat to the pellets or wood chips in the drum.

In connection with the present invention the superheated steam has a moisture content of 80% to 90% and a temperature of from 280°C to 330°C. The use of superheated steam in connection with the present invention allows the reduction of oxygen within the rotatable drum to an oxygen content in the range of 0 to 6%, preferably in a range of 0 to 2% with reference to the volume of the drum.

The expression "combustible pellets" or "pellets", as used in connection with the present invention, relates to pellets pressed from biomass. The term "biomass" comprises all herbaceous and ligneous renewable raw materials and mixtures thereof such as wood, straw, etc.. The pellets can consist entirely of biomass. However, the pellets may also include other materials, such as for example refuse being added to the starting material. Preferably, the pellets substantially consist of biomass.

The heat treatment of the pellets or wood chips takes place within a temperature range which is higher than the temperature at which pellets or wood chips are dried and which is lower than the temperature at which pellets or wood chips are burned. It is assumed that in the temperature range of preferably 280°C to 330°C processes in the pellets or wood chips are set into motion which lead to a paralytic breakdown of inorganic compounds and to the escape of various volatile components. Tests have shown that the heat treatment of pellets or wood chips in the above temperature range leads to highly water-repelling properties which allow the storing of combustible pellets or wood chips outdoors without uptake of moisture. In addition, the energy content of the pellets or wood chips is increased by the heat treatment. The process of refining the pellets or wood chips with heat in order to set into motion the paralytic breakdown and the escape of various volatile components and in order to reach the property of water repellency is referred to in the following as torrification. According to the present invention the pellets are firstly pelletized from biomass e.g. in a pre-connected process or apparatus, and are torrified thereafter. In the case of wood chips, the wood chips are preferably firstly torrified and are then pelletized e.g. in a subsequent process or apparatus.

Preferably, the inlet port of the housing is configured to direct the superheated steam into the housing and towards the rotatable drum at an inlet streaming direction transverse to the conveying direction of the drum. In other words: the superheated steam is directed into the housing and towards the rotatable drum at an angle of about 90° to the conveying direction of the drum. This allows the superheated steam to be introduced into the drum at a low speed. Moreover, this further allows the superheated steam to be directed through the rotatable drum towards the outlet port at a low speed. High speeds of the superheated steam within the rotatable drum are omitted in order to avoid any reaction of the pellets or wood chips with substances from the environment, to avoid any damage to the pellets or wood chips and to avoid pollution of the drum by dust from the pellets or wood chips.

In an embodiment of the present invention the heat source is formed as a first heat exchanger which is adapted to transfer heat from a heat transferring medium, which is a thermal oil, to the heating medium. The use of a heat transferring medium allows transferring heat from a first position to a second position, e.g. to the first heat exchanger, which is distinct from the first position. The expression "thermal oil" or "thermal oils" as used herein shall designate temperature-resistant mineral or synthetic oils that are commonly used in industrial plants to supply heat to a process by dissipating heat elsewhere. The thermal oils are preferably transported in pipelines within a closed circuit.

In another embodiment of the present invention each baffle has a cross-sectional area in a first plane oriented perpendicular to the longitudinal axis of the drum, wherein the cross-sectional area forms an arc pointing in the circumferential direction of the drum. The baffles are configured to circulate the pellets or wood chips in the drum and to convey the pellets or wood chips from the product inlet to the product outlet along a conveying direction. Preferably, the drum is tilted relative to the ground, i.e. a horizontal line, such that the longitudinal axis of the drum and the ground encloses an angle of 0° to 10°, preferably of 0° to 5°, more preferably of about 2°. This facilitates conveying the pellets or wood chips from the product inlet to the product outlet.

In an embodiment according to the present invention the arc has a starting point and an end point, wherein the baffles are arranged such that the starting point of each arc in the first plane is positioned on a first virtual circle around the longitudinal axis having a first diameter and the end point of each arc in the first plane is positioned on a second virtual circle around the longitudinal axis having a second diameter, wherein the second diameter is larger than the first diameter. Preferably, the baffles are arranged in the drum such that the arc of each baffle is oriented from the starting point to the end point of the arc in the direction of rotation of the drum. Preferably, all baffles are arranged in the drum such that the arc of each baffle is oriented from the starting point to the end point of the arc in a clockwise direction around the longitudinal axis of the drum.

In another embodiment of the present invention at least two baffles each partially overlap in the circumferential direction, wherein the overlapping baffles partially extend parallel to each other in the circumferential direction of the drum. Preferably, at least two baffles each overlap in an overlap region. Preferably, the at least two overlapping baffles are arranged at a distance from one another in the overlapping region in a radial direction relative to the longitudinal axis. The overlapping baffles prevent the pellets or wood chips from falling out of the drum and at the same time provide an opening through which the heating medium may stream into and/or out of the drum.

In an embodiment according to the present invention the housing comprises multiple inlet ports and multiple outlet ports, that the heating system comprises multiple heating circuits with multiple heat sources formed as first heat exchangers, wherein each heating circuit has a supply line and a return line, wherein each supply line is adapted to connect one of the multiple heat sources and one of the multiple inlet ports of the housing and, wherein each return line is adapted to connect one of the outlet ports of the housing and the one of the multiple heat sources. Preferably, the inlet port and outlet ports are evenly distributed over the housing along the longitudinal axis. This allows the heating medium to be equally spread in the drum along the longitudinal axis and thus helps to prevent major temperature fluctuations in the drum along the longitudinal axis. Thus, the pellets or wood chips are equally heated along the longitudinal axis of the drum

In another embodiment of the present invention the heating system further comprises a burner and a heat transferring circuit for transferring the heat generated by the burner to the first heat exchanger. The heat transferring circuit comprises a second heat exchanger connected to the burner, transferring lines connecting the second heat exchanger and the first heat exchanger and the heat transferring medium streaming through the transferring lines. The heat transferring circuit allows the transfer of the heat from the second heat exchanger and thus from the burner to remote positions. The heat transferring circuit may, in addition to the first heat exchanger, also be used to deliver heat to further positions, such as e.g. a further heat exchanger, at which additional heat is needed.

In an embodiment according to the present invention the outlet port of the housing is configured to receive the heating medium of the heating circuit together with volatile process gases outgasing from the pellets or wood chips when being heated in the rotatable drum. The heating system comprises a recycling system for recycling the volatile process gases which is connected to the outlet port of the housing. The volatile components emerging from the pellets or wood chips are directly entrained by the stream of superheated steam. The volatile components are thus directly discharged from the rotatable drum and the housing through the outlet port. The use of the recycling system allows the re-use of the superheated steam after having passed the recycling system such that the steam may be re-heated and directed again to the inlet port of the housing for heating the pellets or wood chips. Moreover, as the volatile components comprise combustible substances which might be used as fuel in e.g. the burner, the volatile components may also be used after being recycled from the superheated steam.

In another embodiment according to the present invention the recycling system is configured to separate the volatile process gases exiting the drum and the housing via the outlet port from the water of the heating circuit. The heating system comprises a recycle line connecting the recycling system and the burner for supplying the volatile process gases to the burner for combustion. Re-directing the volatile process gases and the combustible components contained therein to the burner reduces the need for primary energy, e.g. liquefied petroleum gas (LPG), for operating the burner. Thus, re-using the volatile components as fuel for the burner reduces operating costs of the system for refining pellets or wood chips.

Preferably, the system further comprises a cooling system for cooling the pellets or wood chips being dispensed from the rotatable drum. The cooling system is connected to the second end of the drum and comprises a second driven rotatable drum with a receiving end to receive pellets or wood chips from the product outlet of the drum and a dispensing end for dispensing the cooled pellets or wood chips form the second drum. The second drum extends along and is rotatable around a second longitudinal axis. The second drum comprises baffles extending parallel to the second longitudinal axis of the second drum from the receiving end towards the dispensing end of the second drum. The baffles are adapted to circulate the pellets or wood chips in the second drum upon rotation of the second drum and to convey the pellets or wood chips from the receiving end to the dispensing end along a second conveying direction. The baffles are mounted at equal angular distances from one another in a circumferential direction of the second drum, thereby forming multiple openings through which a cooling medium streams into and out of the second drum. The second drum is surrounded by a second housing. The second housing comprises an inlet port for introducing the cooling medium into the second housing and towards the second drum and an outlet port for dispensing the cooling medium from the second housing and away from the second drum. Preferably, the structure of the drum and the second drum essentially correspond.

Due to the heat emitted to the combustible pellets or wood chips, it is possible that the reactions in the pellets or wood chips will continue after being dispensed from the drum. This is undesirable because the heating power of the pellets may be lost. It is therefore advantageous to cool down the pellets or wood chips directly after the heat treatment. This can be achieved in the cooling system according to the present invention.

In another embodiment according to the present invention the cooling system comprises a cooling circuit with the cooling medium and a cooling source, wherein the cooling circuit has a supply line connecting the cooling source and the inlet port of the second housing and a return line connecting the outlet port of the second housing and the cooling source and, wherein the cooling source is formed as a third heat exchanger which dispenses the heat absorbed in the cooling medium from the second drum of the cooling circuit into ambient air. Preferably, the cooling medium is oxygen depleted air comprising a reduced oxygen content in the range of 0% to 10%, preferably in the range of 0% to 5%, more preferably in the range of 0% to 2%.

The above object is also achieved by a cooling system for cooling heated pellets comprising the features of claim 12. Preferred embodiments are set out in the dependent claims.

The cooling system is connectable to a product outlet at a second end of a rotatable drum through the heated pellets or wood chips are dispensed. The cooling system comprises a second driven rotatable drum with a receiving end to receive pellets or wood chips from the product outlet of the drum and a dispensing end for dispensing the cooled pellets or wood chips form the second drum. The second drum extends along and is rotatable around a second longitudinal axis. The second drum comprises baffles extending parallel to the second longitudinal axis of the second drum from the receiving end towards the dispensing end of the second drum. The baffles, upon rotation of the second drum, are adapted to circulate the pellets or wood chips in the second drum and to convey the pellets or wood chips from the receiving end to the dispensing end. The baffles are mounted at equal angular distances from one another in a circumferential direction of the second drum, thereby forming multiple openings through which a cooling medium streams into and out of the drum. The second drum is surrounded by a second housing, wherein the second housing comprises an inlet port for introducing the cooling medium into the second housing and towards the second drum and an outlet port for dispensing the cooling medium from the second housing and away from the second drum.

In this connection reference is made to the functions of the cooling system described above in connection with the system for refining pellets or wood chips by heat. The cooling system may be used as part of the system for refining pellets or wood chips as described above. However, the cooling system according to the present invention may also be used separately in combination with another system or apparatus in order to cool heated pellets or wood chips.

Preferably, the cooling system further comprises a cooling circuit with the cooling medium and a cooling source, wherein the cooling circuit has a supply line connecting the cooling source and the inlet port of the second housing and a return line connecting the outlet port of the second housing and the cooling source and, wherein the cooling source is formed as a third heat exchanger which dispenses the heat absorbed in the cooling medium from the second drum of the cooling circuit into ambient air. Preferably, the cooling medium is oxygen depleted air comprising a reduced oxygen content in the range of 0% to 10%, preferably in the range of 0% to 5%, more preferably in the range of 0% to 2%.

The above object is also achieved by a method for refining pellets by heat comprising the method steps according to claim 14. Preferred embodiments are set out in the dependent claims.

The method comprises the following steps:
- Continuously providing pellets pressed from biomass or wood chips to a drum.
- Rotating the drum around a longitudinal axis, wherein the drum has baffles which, upon rotation of the drum, circulate the pellets or wood chips in the drum and convey the pellets or wood chips from a product inlet of the drum to a product outlet of the drum along a conveying direction, wherein the baffles extend parallel to the longitudinal axis from a first end of the drum towards a second end of the drum, wherein the baffles are mounted at equal angular distances from one another in a circumferential direction of the drum, thereby forming multiple openings through which a heating medium streams into and out of the drum and, wherein the drum is surrounded by a housing which comprises an inlet port for introducing the heating medium into the housing and towards the drum and an outlet port for dispensing the heating medium from the housing and away from the rotatable drum.
- Heating the pellets or wood chips to a temperature of 270°C to 350°C by directing the heating medium to the inlet port of the housing, through the drum and out of the outlet port of the housing, wherein the drum is rotated at a rotation speed that is chosen such that the pellets are heated 15 min to 45 min within the drum and, wherein the heating medium is superheated steam having a humidity of 80% to 90% and a temperature of 270°C to 350°C.

The original moisture content of the biomass, e.g. wood or straw, typically lies within a range of between 15% and 60%. The starting material has to be dried according to the type of biomass before pelletization to about 6% to 20%. During pelletization the moisture content is further reduced. Typically, the moisture content of pellets before the heat treatment is preferably between 5% to 15%. In connection with the present invention the moisture content is indicated in % per weight.

The heat treatment takes place within a temperature range which is higher than the temperature at which pellets or wood chips are dried and which is lower than the temperature at which pellets or wood chips are burned. It is assumed that in the temperature range of preferably 280°C to 330°C processes in the pellets or wood chips are set into motion which leads to a paralytic breakdown of inorganic compounds and escape of various volatile components. Tests have shown that the heat treatment of pellets or wood chips in the above temperature range leads to highly water-repelling properties which allow the storing of pellets or wood chips outdoors. The process of refining the pellets or wood chips with heat in order to set into motion the paralytic breakdown and the escape of various volatile components and in order to reach the property of water repellency is referred to in the following as torrification. According to the present invention the pellets are firstly pelletized from biomass e.g. in a pre-connected process or apparatus and are torrified thereafter. In the case of wood chips, the wood chips are preferably firstly torrified and are then pelletized e.g. in a subsequent process or apparatus.

In general, the structure of the pellets or wood chips changes more rapidly, the higher the temperature is. However, at very high temperatures, the risk is also greater that the change in the structure will not take place uniformly but rather that undesirable burning will take place at the surface whereas the structure has not yet changed at all in the center. The best results with respect of duration of the heat treatment and with respect to the uniform structure of the pellets or wood chips have been achieved in a temperature range of between 280°C to 330°C. Moreover, as described above it is advantageous that the pellets or wood chips have a moisture content of 5% to 15% with reference to the weight before starting the torrification process.

When the heat treatment of the pellets or wood chips is finished, a quantity of heat is stored in the pellets or wood chips. It is possible that the reaction will continue in the interior of the pellets or wood chips, even though the pellets or wood chips are no longer exposed to heat. This is undesirable because the heating power of the pellets may be lost. It is therefore advantageous if the pellets or wood chips are cooled directly after the heat treatment. In order to cool the pellets or wood chips, use can be made for example of water which is preferably not warmer than room temperature.

The pellets obtained from the torrification can be for example used in co-firing in power stations. The pellets are burned as an accompaniment to the actual fuel, for example coal in the power stations. For this purpose, the pellets have to be pulverized such that, for example 95% by weight of the particles have a fineness of less than 2mm. Tests have proven that the torrification results in the particles of the pellets having an increased brittleness such that the pellets can be grinded using a smaller consumption of energy than classic pellets. Mills which are typically present in power stations can thus be used for the grinding of the pellets, which has not been possible in the case of the classic pellets made from untreated biomass. Also for this reason, the pellets produced are better suited for a co-firing use than classic pellets. In addition, the energy content of the pellet is increased by the torrification.

In an embodiment according to the above method the heating of the pellets or wood chips takes place in an atmosphere comprising a reduced oxygen content in the range of 0% to 10% preferably in the range of 0% to 5%, more preferably in a range of 0% to 2%. Limiting the content of oxygen is advantageous in order to avoid dust explosions and/or combustion of the pellets or wood chips while being exposed to heat. The use of superheated steam as the heating medium allows the reduction of content of oxygen within the rotatable drum. Additionally, the use of superheated steam allows the reduction of the streaming speeds within the drum. Due to the low streaming speeds and due to the volatile process gases out gassing from the pellets or wood chips during the heat treatment, an overpressure is produced in the drum which further presses the oxygen out of the drum. Thus, the content of oxygen is further reduced.

The invention will now be described in connection with one exemplary embodiment shown in the Figures in which:
- Figure 1: shows a schematic view of a system for refining pellets or wood chips according to the present invention with a cooling system,
- Figure 2: shows a cross-sectional view of a drum along the line A-A in Fig. 1,
- Figure 3: shows a schematic view of the cooling system of Figure 1 in detail,
- Figure 4: shows a schematic view of a second embodiment of a cooling system.

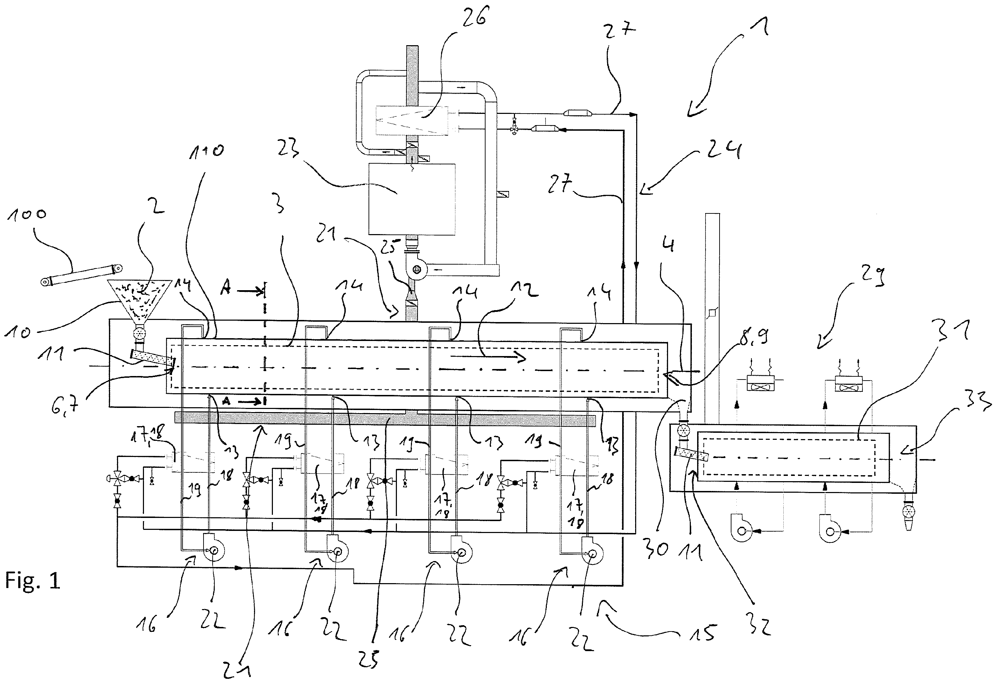

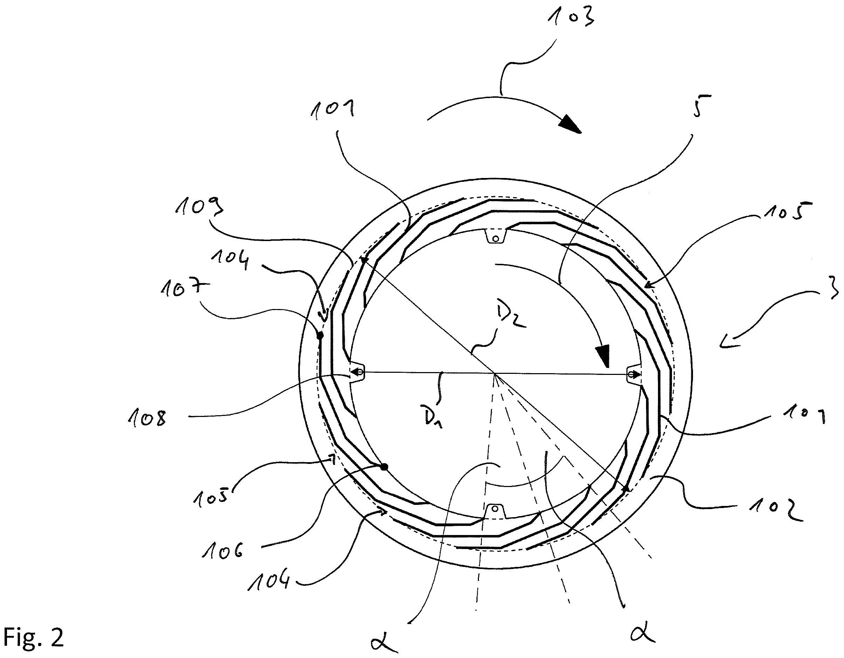

Figure 1 shows a system 1 for refining pellets or wood chips 2. The system comprises a rotatable drum 3 which is for example driven by a motor via a chain (not shown). The drum 3 extends along a longitudinal axis 4 and is rotatable in a rotation direction 5 (Fig. 2) around the longitudinal axis 4.

The rotatable drum 3 comprises a product inlet 6 for receiving the pellets or wood chips 2 at a first end 7 of the rotatable drum 3 and a product outlet 8 for dispensing the pellets or wood chips 2 at a second end 9 of the rotatable drum 3.

The system 1 further comprises a hopper 10 and a conveyer 100 feeding the hopper with pellets or wood chips 2. The hopper 10 is connected to the product inlet 6 via a worm gear 11 which is adapted to convey the pellets 2 from the hopper 10 to the product inlet 6 of the rotatable drum 3.

Fig. 2 shows a cross-sectional view of the drum 3. The drum 3 comprises multiple baffles 101 which, upon rotation of the drum 3, are adapted to circulate the pellets or wood chips 2 in the drum 3 and to convey the pellets or wood chips 2 from the product inlet 6 to the product outlet 8 along a conveying direction 12 (Fig. 1). The baffles 101 extend parallel to the longitudinal axis 4 from the first end 7 towards the second end 9 of the drum 3. Preferably, the drum 3 has a first flange (not shown) at the first end 7 and a second flange 102 at the second end 9, wherein the baffles are connected to the first flange and the second flange 102.

The baffles 101 are mounted at equal angular distances α from one another in a circumferential direction 103 of the drum 3, thereby forming multiple openings 104 through which a heating medium streams into and out of the drum 3. The heating medium is superheated steam.

Each baffle 101 has a cross-sectional area in a first plane oriented perpendicular to the longitudinal axis 4 of the drum 3, wherein the cross-sectional area forms an arc 105 pointing in the circumferential direction 103 of the drum 3. The arc 105 has a starting point 106 and an end point 107. The baffles 101 are arranged such that the starting point 106 of each arc 105 in the first plane is positioned on a first virtual circle 108 around the longitudinal axis 4 having a first diameter D₁ and the end point 107 of each arc 105 in the first plane is positioned on a second virtual circle 109 around the longitudinal axis 4 having a second diameter D₂, wherein the second diameter D₂ is larger than the first diameter D₁. Up to three baffles 101 each partially overlap in the circumferential direction 103, wherein the overlapping baffles 101 partially extend parallel to each other in the circumferential direction 103 of the drum 3.

Returning to Figure 1, the system for refining pellets or wood chips 2 by heat further comprises a housing 110 surrounding the drum 3. The housing 110 comprises multiple inlet ports 13 for introducing the heating medium into the housing 110 and towards the drum 3 and multiple outlet ports 14 for dispensing the heating medium together with volatile process gases outgasing from the pellets or wood chips 2 when being heated from the housing 110 and away from the rotatable drum 3. Each inlet port 13 is configured to direct the heating medium towards the rotatable drum 3 at an inlet streaming direction 28 transverse to the conveying direction 12 of the drum 3.

The system further comprises a heating system 15 for heating the pellets or wood chips 2 in the drum 3 comprising multiple, in particular four heating circuits 16 with the heating medium and with multiple, in particular four heat sources 17. The heat sources 17 are formed as first heat exchangers 18 which are adapted to transfer heat from a heat transferring medium, which is thermal oil, to the heating medium. Each heating circuit 16 has a supply line 19 and a return line 20, wherein each supply line 19 is adapted to connect one of the multiple heat sources 17 and one of the multiple inlet ports 13 of the housing 110 and, wherein each return line 20 is adapted to connect one of the outlet ports 14 of the housing 110 and the one of the multiple heat sources 17. The heating medium is supplied through the supply line 19 from the heat source 17 to the inlet port 13 of the housing 110, streams through the housing 110 and through the rotatable drum 3 and returns through the return line 20 from the outlet port 14 to the heat source 17. The heat source 17 is adapted to deliver heat to the heating medium to produce superheated steam.

The heating system 15 further comprises a recycling system 21. The recycle system 21 is connected to the rotatable drum 3 and to each of the first heat exchanger 18 via each of the return lines 20 of the multiple heating circuits 16. The recycling system 21 is configured to recycle the volatile process gases outgasing from the pellets or wood chips 2 when being heated. In particular, the recycling system 21 is configured to separate the volatile process gases exiting the drum 3 via the multiple outlet ports 14 from the heating medium and to provide the separated volatile process gases for further use.

Each heating circuit 16 further comprises a circulator pump 22 which is adapted to circulate the heating medium through the heating circuit 16. The heating medium is supplied through the supply line 19 from the heat source 17 to the inlet port 13 of the housing 110, streams through the rotatable drum 3 and returns through the return line 20 from the outlet port to the recycling system 21 and the first heat exchanger 18. The circulator pump 22 is operated such that the heating medium enters and streams through the drum 3 at a low streaming speed.

The heating system 15 further comprises a burner 23 and a heat transferring circuit 24 for transferring the heat generated by the burner 23 to the first heat exchangers 18. The burner 23 is connected to the recycling system 21 via a recycle line 25 which is adapted to supply the volatile process gases separated by the recycling system 21 to the burner 23 for combustion.

The heat transferring circuit 24 comprises a second heat exchanger 26 connected to the burner 23, transferring lines 27 connecting the second heat exchanger 26 and the multiple first heat exchangers 18 and the heat transferring medium streaming through the transferring lines 27. The heat transferring circuit further comprises a circulator pump (not shown) for circulating the heat transferring medium throughout the transferring line 27 thereby transferring the heat generated by the burner 23 from the second heat exchanger 26 to the multiple first heat exchangers 18.

The system 1 further comprises a cooling system 29 for cooling the pellets or wood chips 2 being dispensed from the rotatable drum 3. The cooling system 29 is connected to the second end 9 of the drum 3 via a chute 30 and a worm gear 11. The cooling system 29 comprises a second driven rotatable 31 drum with a receiving end 32 to receive pellets or wood chips 2 from the product outlet 8 of the drum 3 and a dispensing end 33 for dispensing the cooled pellets or wood chips 2 form the second drum 31. The structure of the drum 3 as shown in Figures 1 and 2 and of the second drum 31 is essentially the same. Thus, the same reference sign for corresponding parts are used with regard to the features of the drum 3 and the second drum 31.

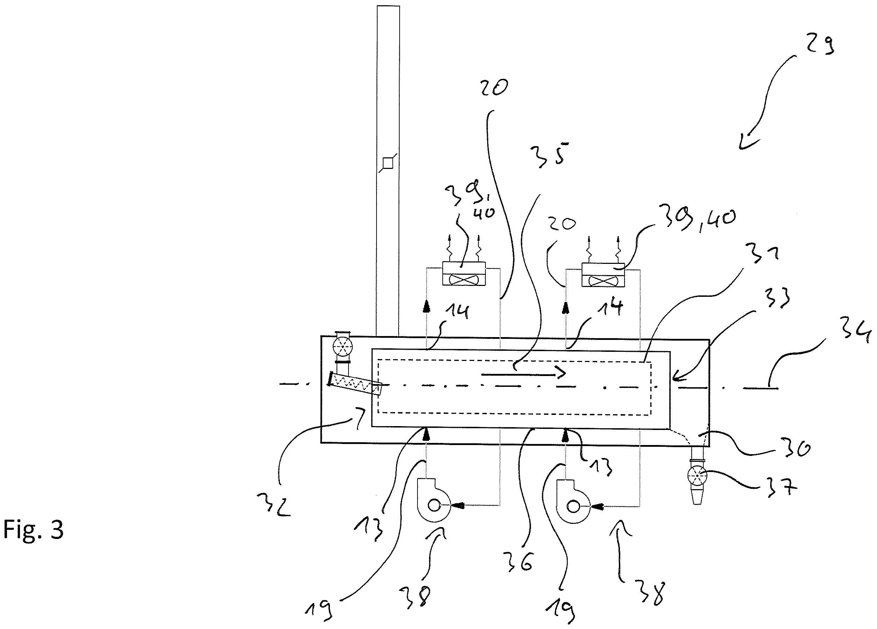

Figure 3 shows the cooling system 29 in more detail. The second drum 31 extends along and is rotatable around a second longitudinal axis 34. The second drum 31 comprises baffles 101 (Fig. 1) extending parallel to the second longitudinal axis 34 of the second drum 31 from the receiving end 32 towards the dispensing end 33 of the second drum 31. The baffles 101 are adapted to circulate the pellets or wood chips 2 in the second drum 31 upon rotation of the second drum 31 and to convey the pellets or wood chips 2 from the receiving end 32 to the dispensing end 33 along a second conveying direction 35. The baffles 101 are mounted at equal angular distances α from one another in a circumferential direction 103 of the second drum 31, thereby forming multiple openings 104 through which a cooling medium streams into and out of the second drum 31 (Fig. 1). The second drum 31 is surrounded by a second housing 36. The second housing 36 comprises multiple inlet ports 13, in particular two inlet ports 13, for introducing the cooling medium into the second housing 36 and towards the second drum 31 and multiple outlet ports 14, in particular 2 outlet ports 14, for dispensing the cooling medium from the second housing 36 and away from the second drum 31. The second housing 36 comprises a chute 30 and a rotary valve 37 at the dispensing end of the second drum 31 to dispense the cooled pellets or wood chips 2 e.g. into a bag or storage container (not shown).

The cooling system 29 comprises multiple cooling circuits 38, in particular two cooling circuits 38, with the cooling medium and with a cooling source 39. Each cooling circuit 38 has a supply line 19 connecting the cooling source 39 and one of the inlet ports 13 of the second housing 36 and a return line 20 connecting one of the outlet ports 14 of the second housing 36 and the cooling source 39. The cooling source 39 is formed as a third heat exchanger 40 which dispenses the heat absorbed in the cooling medium from the second drum 31 of the cooling circuit 38 into ambient air.

The cooling system 29 as described above can be used together with the system 1 for refining pellets or wood chips 2 but can also be used independently of the system 1 in combination with other apparatuses suitable to heat, in particular torrify, pellets and or wood chips 2.

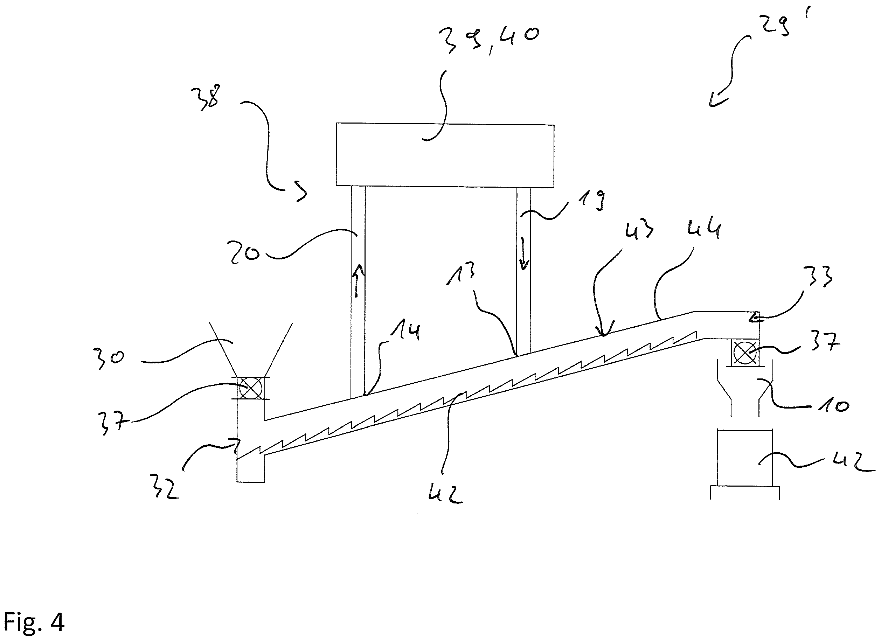

Fig. 4 shows a second embodiment of a cooling system 29. The cooling system 29' differs from the one as shown in Fig. 3 in that it comprises a screw conveyor 42 which is connected to the second end 9 of the drum 3 via a chute 30 and a rotary valve 37. The screw conveyor 42 comprises a receiving end 32 to receive pellets or wood chips 2 from the product outlet 8 of the drum 3 and a dispensing end 33 for dispensing the cooled pellets or wood chips 2 via a rotary valve 37 and a hopper 10 e.g. into a bag or storage container 42.

The screw conveyor 42 is surrounded by a third housing 43 having a housing wall 44 with cooling channels (not shown) running through it. The third housing 43 further comprises an inlet port 13 and an outlet port 14 which are fluidically connected to the cooling channels. The inlet port 13 is configured to introduce a cooling medium, e.g. water, into the cooling channels of the third housing 43. The outlet port 14 is configured to dispense the cooling medium from the cooling channels of the third housing 43.

The cooling system 29' further comprises a cooling circuit 38 with the cooling medium and with a cooling source 39. Each cooling circuit 38 has a supply line 19 connecting the cooling source 39 and the inlet port 13 of the third housing 43 and a return line 20 connecting the outlet port 14 of the third housing 43 and the cooling source 39. The cooling source 39 is formed as a third heat exchanger 40 which dispenses the heat absorbed in the cooling medium from the third housing 43 of the screw conveyer 41 into ambient air.

The cooling system 29' may optionally comprises at least one spray nozzle (not shown) for spraying water onto the pellets or wood chips 2 while being conveyed by the screw conveyer.

The spray nozzle is preferably arranged in the third housing 43 in proximity to the screw conveyer 41.

The second embodiment of the cooling system 29' as described above can be used together with the system 1 for refining pellets or wood chips 2 but can also be used independently of the system 1 in combination with other apparatuses suitable to heat, in particular torrify, pellets and or wood chips 2.

In the following a method for refining pellets by heat is described with reference to Figures 1 to 4.

In a first step the pellets 2 pressed from biomass or wood chips are continuously provided from the hopper 10 via the worm gear 11 to the rotatable drum 3. Depending on the material the pellets or wood chips 2 are made from, the moisture content in the pellets or wood chips 2 is between 5% and 15% by weight.

In a second step the drum 3 having baffles 101 is rotated by the motor and the chain connecting the motor to the rotatable drum 3. By rotating the drum 3 the pellets or wood chips 2 are circulated in the drum 3 and are continuously conveyed through the drum 3 along the conveying direction 12 from the product inlet 8 of the drum 3 to the product outlet 8 of the drum 3.

In a third step the pellets or wood chips 2 are heated to a temperature of 270°C to 350°C by directing the heating medium to the inlet port 13 of the housing 110, through the drum 3 and out of the outlet port 14 of the housing 110. The heating medium is superheated steam. The superheated steam has a humidity of 80% to 90% and a temperature of 270°C to 350°C. The heat treatment takes place within a temperature range which is higher than the temperature at which pellets or wood chips 2 are dried and which is lower than the temperature at which pellets or wood chips 2 are burned.

The drum 3 is rotated at a rotation speed that is chosen such that the pellets or wood chips 2 are heated 15 minutes to 45 minutes within the drum 3. In this time period a paralytic breakdown of the inorganic compounds of the pellets or wood chips 2 takes place. At the same time various volatile components escape from the pellets or wood chips 2. As a result of the heat treatment the pellets or wood chips 2 have highly water-repelling properties and are thus refined in such a manner that they can be stored outdoors over a relatively long period of time. Additionally, the energy content (burning power, MJ/kg) of the pellets or wood chips is increased. The heating of the pellets takes place in an atmosphere comprising reduced oxygen content in the range of 0% to 10%, preferably in the range of 0% to 5% more preferably in the range of 0% to 2%.

The superheated steam used to heat the pellets or wood chips 2 within the drum 3 circulates in the heating circuit 16 of the heating system 15. The superheated steam is produced by the multiple first heat exchangers 18 transferring the heat of a heat transferring medium, which is thermal oil, to the heating medium. The thermal oil circulates in transferring lines 27 of the heat transferring circuit 24 between a second heat exchanger 26 and the multiple first heat exchangers 18. The burner 23 which is connected to the second heat exchanger 26 produces heat which is transferred by the second heat exchanger 26 to the heat transferring medium. The burner 23 is operated with fuel such as for example liquefied petroleum gas (LPG). However, the burner 23 also receives combustible volatile process gases through the recycle line 25. The volatile process gasses outgas from the pellets or wood chips 2 when being heated in the drum 3 and are separated from the heating medium exiting the rotatable drum 3 by the recycling system 21.

Energy, which is produced from the burner 23 and which is not used from the second heat exchanger 26 as well as recycled volatile process gases which are not needed by the burner maybe supplied to additional apparatuses for combustion or heating.

When the pellets or wood chips 2 leave the rotatable drum 3 at the second end 9 of the drum 3, the pellets or wood chips 2 slide down the chute 30, fall onto the worm gear 11 and enter the cooling system 29. When falling onto the worm gear 11 the pellets or wood chips 2 comprise a temperature of about 300°C. The pellets or wood chips 2 are then conveyed by the worm gear 11 towards the receiving end 32 of the second drum 31. The second drum 31 essentially corresponds to the drum 3. Accordingly, the second drum 31 also has baffles 101 and is rotated by a motor and a chain (not shown) connecting the motor to the second drum 31. By rotating the second drum 31 the pellets or wood chips 2 are circulated in the second drum 31 and are continuously conveyed through the second drum 31 along the second conveying direction 35 from the receiving end 32 to the dispensing end 33 of the second drum 31.

While being conveyed, the pellets or wood chips 2 are cooled such that the pellets or wood chips 2 reach a temperature of about 80°C when exiting the second drum 31 at the dispensing end 33. The cooling is achieved by circulating the cooling medium in the two cooling circuits 38 thereby directing the cooling medium to corresponding inlet ports 13 of the second housing 36, through the second drum 31 and out of the corresponding outlet ports 14 of the second housing 36. The cooling medium is water. The cooling medium is chilled by the two third heat exchangers 40 which each dispense the heat absorbed in the cooling medium from the second drum 31 of the cooling circuit 38 into ambient air.

Subsequently, the coold pellets or wood chips 2 are dispensed from the second drum 31 via the rotary valve and the hopper 10 into a bag or storage container.

Alternatively, according to a second embodiment of the cooling system 29', the pellets or wood chips 2 leaving the rotatable drum 3 at the second end 9 of the drum 3 slide down the chute 30 and fall onto the conveyer 42. When falling onto the conveyer 42 the pellets or wood chips 2 comprise a temperature of about 300°C. The pellets or wood chips 2 are then conveyed by the conveyer 42 to the dispensing end 33 for dispensing the cooled pellets or wood chips 2 via a rotary valve and a hopper 10 into a bag or storage container 42.

While being conveyed, the housing wall 44 of the third housing 43 and thus the pellets or wood chips 2 located in the third housing 43 are cooled such that the pellets or wood chips 2 reach a temperature of about 80°C when exiting the conveyer at the dispensing end 33. The cooling is achieved by circulating a cooling medium, which is water, in the cooling circuit 38. The colling medium is directed from a third heat exchanger 40 to the inlet port 13 of the third housing 43 into the cooling channels of the third housing 43 thereby cooling the housing wall 44 and the pellets or wood chips 2 in the third housing 43. The colling medium is then dispensed from the cooling channels of the third housing 43 via the outlet ports 14 and streams towards the third heat exchanger 40. Subsequently, the cooling medium is chilled by the third heat exchanger 40 by dispensing the heat absorbed in the cooling medium from the third housing 43 of the screw conveyer 41 into ambient air.

Optionally, the cooling medium may additionally be sprayed onto the pellets or wood chips 2 while being conveyed via spray nozzles (not shown) to achieve additional cooling.

**Reference numerals**

| | | | |
|---|---|---|---|
| 1 | system for refining pellets | 18 | first heat exchanger |
| 2 | pellets | 19 | supply line (heating circuit) |
| 3 | drum | 20 | return line (heating circuit) |
| 4 | longitudinal axis | 21 | recycling system |
| 5 | rotation direction | 23 | burner |
| 6 | product inlet (drum) | 24 | heat transferring circuit |
| 7 | first end (drum) | 25 | recycle line |
| 8 | product outlet (drum) | 26 | second heat exchanger |
| 9 | second end (drum) | 27 | transferring lines |
| 10 | hopper | 28 | inlet streaming direction (inlet port) |
| 100 | conveyer | 29 | cooling system |
| 11 | worm gear | 30 | chute |
| 101 | baffles | 31 | second drum |
| 12 | conveying direction | 32 | receiving end |
| 102 | second flange | 33 | dispensing end |
| α | angular distance | 34 | second longitudinal axis |
| 103 | circumferential direction | 35 | second conveying direction |
| 104 | opening | 36 | second housing |
| 105 | arc | 37 | rotary valve |
| 106 | starting point | 38 | cooling circuit |
| 107 | end point | 39 | cooling source |
| 108 | first virtual circle | 40 | third heat exchanger |
| D₁ | first diameter | 41 | screw conveyer |
| 109 | second virtual circle | 42 | storage container |
| D₂ | second diameter | 43 | third housing |
| 110 | housing | 44 | housing wall |
| 13 | inlet port (drum) | 35 | spray nozzle |
| 14 | outlet port (drum) | 36 | conveyer |
| 15 | heating system | 37 | storage box |
| 16 | heating circuit | 38 | baffles |
| 17 | heat source | 39 | splitting baffles |
| α | | | acute angle |
| 40 | | | edge |
| 41 | | | inner walls |
| 42 | | | first duct |
| 43 | | | second duct |

## Claims

1. System for refining pellets or wood chips (2) by heat comprising:
a driven rotatable drum (3) which extends along and is rotatable around a longitudinal axis (4),
wherein the drum (3) has a product inlet (6) for receiving the pellets (2) or wood chips at a first end (7) of the drum (3) and a product outlet (8) for dispensing the pellets (2) at a second end (9) of the drum (3),
wherein the drum (3) comprises multiple baffles (101) which, upon rotation of the drum (3), are adapted to circulate the pellets or wood chips (2) in the drum (3) and to convey the pellets or wood chips (2) from the product inlet (6) to the product outlet (8) along a conveying direction (12),
wherein the baffles (101) extend parallel to the longitudinal axis (4) from the first end (7) towards the second end (9) of the drum (3) and,
wherein the baffles (101) are mounted at equal angular distances (α) from one another in a circumferential direction (103) of the drum (3), thereby forming multiple openings (103) through which a heating medium streams into and out of the drum (3),
a housing (110) surrounding the drum (3),
wherein the housing (110) comprises an inlet port (13) for introducing the heating medium into the housing (110) and towards the drum (3) and an outlet port (14) for dispensing the heating medium from the housing (110) and away from the rotatable drum (3),
a heating system (15) for heating the pellets or wood chips (2) in the drum (3) comprising at least one heating circuit (16) with the heating medium and with a heat source (17),
wherein the heating circuit (16) has a supply line (19) connecting the heat source (17) and the inlet port (13) of the housing (110) and a return line (20) connecting the outlet port (14) of the housing (110) and the heat source (17),
wherein the heating medium is superheated steam, which is supplied through the supply line (19) from the heat source (17) to the inlet port (13) of the housing (110), streams through the housing (110) and through the rotatable drum (3) and returns through the return line (20) from the outlet port (14) to the heat source (17) and,
wherein the heat source (17) is adapted to deliver heat to the heating medium to produce superheated steam.

2. System according to claim 1, **characterized in that** the heat source (17) is formed as a first heat exchanger (18) which is adapted to transfer heat from a heat transferring medium, which is thermal oil, to the heating medium.

3. System according to any of the preceding claims, **characterized in that** each baffle (101) has a cross-sectional area in a first plane oriented perpendicular to the longitudinal axis (4) of the drum (3), wherein the cross-sectional area forms an arc (105) pointing in the circumferential direction (103) of the drum (3).

4. System according to claim 3, **characterized in that** the arc (105) has a starting point (106) and an end point (107), wherein the baffles (101) are arranged such that the starting point (106) of each arc (105) in the first plane is positioned on a first virtual circle (108) around the longitudinal axis (4) having a first diameter (D₁) and the end point (107) of each arc (105) in the first plane is positioned on a second virtual circle (109) around the longitudinal axis (4) having a second diameter (D₂), wherein the second diameter (D₂) is larger than the first diameter (D₁).

5. System according to any of the preceding claims, **characterized in that** at least two baffles (101) each partially overlap in the circumferential direction (103), wherein the overlapping baffles (101) partially extend parallel to each other in the circumferential direction (103) of the drum (3).

6. System according to any of the preceding claims, **characterized in that** the housing (110) comprises multiple inlet ports (13) and multiple outlet ports (14), that the heating system (1) comprises multiple heating circuits (16) with multiple heat sources (17) formed as first heat exchangers (18), wherein each heating circuit (16) has a supply line (19) and a return line (20), wherein each supply line (19) is adapted to connect one of the multiple heat sources (17) and one of the multiple inlet ports (13) of the housing (110) and, wherein each return line (20) is adapted to connect one of the outlet ports (14) of the housing (110) and the one of the multiple heat sources (17).

7. System according to claim 2, **characterized in that** the heating system (15) further comprises a burner (23) and a heat transferring circuit (24) for transferring the heat generated by the burner (23) to the first heat exchanger (18), wherein the heat transferring circuit (24) comprises a second heat exchanger (26) connected to the burner (23), transferring lines (27) connecting the second heat exchanger (26) and the first heat exchanger (18) and the heat transferring medium streaming through the transferring lines (27).

8. System according to any one of the preceding claims, **characterized in that** the outlet port (14) of the housing (110) is configured to receive the heating medium of the heating circuit (16) together with volatile process gases outgasing from the pellets or wood chips (2) when being heated in the rotatable drum (3), wherein the heating system (15) comprises a recycling system (21) for recycling the volatile process gases and, wherein the recycling system (21) is connected to the outlet port (14) of the housing (110).

9. System according to claims 7 and 8, **characterized in that** the recycling system (21) is configured to separate the volatile process gases exiting the housing (110) via the outlet port (14) from the heating medium of the heating circuit (16) and, wherein the heating system (15) comprises a recycle line (25) connecting the recycling system (21) and the burner (23) for supplying the volatile process gases to the burner (23) for combustion.

10. System according to any one of the preceding claims, **characterized in that** the system (1) further comprises a cooling system (29) for cooling the pellets (2) or wood chips being dispensed from the rotatable drum (3),
wherein the cooling system (29) is connected to the second end (9) of the drum (3) and comprises a second driven rotatable drum (31) with a receiving end (32) to receive pellets or wood chips (2) from the product outlet (8) of the drum (3) and a dispensing end (33) for dispensing the cooled pellets or wood chips (2) form the second drum (31), wherein the second drum (31) extends along and is rotatable around a second longitudinal axis (34),
wherein the second drum (31) comprises baffles (101) extending parallel to the second longitudinal axis (34) of the second drum (31) from the receiving end (32) towards the dispensing end (33) of the second drum (31) and which, upon rotation of the second drum (31), are adapted to circulate the pellets or wood chips (2) in the second drum (31) and to convey the pellets or wood chips (2) from the receiving end (32) to the dispensing end (33) along a second conveying direction (35),
wherein the baffles (101) are mounted at equal angular distances (α) from one another in a circumferential direction (103) of the second drum (31), thereby forming multiple openings (104) through which a cooling medium streams into and out of the second drum (31),
wherein the second drum (31) is surrounded by a second housing (36) and,
wherein the second housing (36) comprises an inlet port (13) for introducing the cooling medium into the second housing (36) and towards the second drum (31) and an outlet port (14) for dispensing the cooling medium from the second housing (36) and away from the second drum (31).

11. System according to claim 10, **characterized in that** the cooling system (29) comprises a cooling circuit (38) with the cooling medium and with a cooling source (39),
wherein the cooling circuit (38) has a supply line (19) connecting the cooling source (39) and the inlet port (13) of the second housing (36) and a return line (20) connecting the outlet port (14) of the second housing (36) and the cooling source (39) and,
wherein the cooling source (39) is formed as a third heat exchanger (40) which dispenses the heat absorbed in the cooling medium from the second drum (31) of the cooling circuit (38) into ambient air.

12. Cooling system for cooling heated pellets, wherein the cooling system (29) is connectable to a product outlet (8) at a second end (9) of a rotatable drum (3) through which the heated pellets or wood chips (2) are dispensed, wherein the cooling system (29) comprises:
a second driven rotatable drum (31) with a receiving end (32) to receive pellets or wood chips (2) from the product outlet (8) of the drum (3) and a dispensing end (33) for dispensing the cooled pellets or wood chips (2) form the second drum (31),
wherein the second drum (31) extends along and is rotatable around a second longitudinal axis (34),
wherein the second drum (31) comprises baffles (101) extending parallel to the second longitudinal axis (34) of the second drum (31) from the receiving end (32) towards the dispensing end (34) of the second drum (31) and which, upon rotation of the second drum (31), are adapted to circulate the pellets or wood chips (2) in the second drum (31) and to convey the pellets or wood chips (2) from the receiving end (32) to the dispensing end (33),
wherein the baffles (101) are mounted at equal angular distances (α) from one another in a circumferential direction (103) of the second drum (31), thereby forming multiple openings (103) through which a cooling medium streams into and out of the second drum (31),
wherein the second drum (31) is surrounded by a second housing (36) and,
wherein the second housing (36) comprises an inlet port (13) for introducing the cooling medium into the second housing (36) and towards the second drum (31) and an outlet port (14) for dispensing the cooling medium from the second housing (36) and away from the second drum (31).

13. Cooling system according to claim 12, **characterized in that** the cooling system (29) further comprises a cooling circuit (38) with the cooling medium and with a cooling source (39),
wherein the cooling circuit (38) has a supply line (19) connecting the cooling source (39) and the inlet port (13) of the second housing (36) and a return line (20) connecting the outlet port (14) of the second housing (36) and the cooling source (39) and,
wherein the cooling source (39) is formed as a third heat exchanger (40) which dispenses the heat absorbed in the cooling medium from the second drum (31) of the cooling circuit (38) into ambient air.

14. Method for refining pellets or wood chips (2) by heat, comprising the steps of:
continuously providing pellets pressed from biomass or wood chips (2) to a drum (3);
rotating the drum (3) around a longitudinal axis (4),
wherein the drum (3) has baffles (101) which, upon rotation of the drum (3), circulate the pellets or wood chips (2) in the drum (3) and convey the pellets or wood chips (2) from a product inlet (6) of the drum (3) to a product outlet (8) of the drum (3) along a conveying direction (12),
wherein the baffles (101) extend parallel to the longitudinal axis (4) from a first end (7) of the drum (3) towards a second end (9) of the drum (3),
wherein the baffles (101) are mounted at equal angular distances (α) from one another in a circumferential direction (103) of the drum (3), thereby forming multiple openings (104) through which a heating medium streams into and out of the drum (3) and,
wherein the drum (3) is surrounded by a housing (110) which comprises an inlet port (13) for introducing the heating medium into the housing (110) and towards the drum (3) and an outlet port (14) for dispensing the heating medium from the housing (110) and away from the rotatable drum (3);
heating the pellets or wood chips (2) to a temperature of 270°C to 350°C by directing the heating medium to the inlet port (13) of the housing (110), through the drum (3) and out of the outlet port (14) of the housing (110);
wherein the drum (3) is rotated at a rotation speed that is chosen such that the pellets or wood chips (2) are heated 15 min to 45 min within the drum (3);
wherein the heating medium is superheated steam having a humidity of 80% to 90% and a temperature of 270°C to 350°C.

15. Method according to claim 14 **characterized in that** the heating of the pellets or wood chips (2) takes place in an atmosphere comprising a reduced oxygen content in the range of 0% to 10%, preferably in the range of 0% to 5%, more preferably in the range of 0% to 2%.
